# EUROPEAN PATENT APPLICATION

(11) **EP 0 633 178 A1**
(43) Date of publication of application: **11.01.1995**
(21) Application number: 94304846.2
(22) Date of filing: 01.07.1994
(51) Int. Cl.: B62B 9/08

(54) **Brake for pushchair or perambulator**

(30) Priority: 10.07.1993 GB 9314316
(71) Applicant: BRITAX-TEUTONIA KINDERWAGENFABRIK GmbH, D-32112 Hiddenhausen (DE)
(72) Inventor: Anhofer, Frank, D-33739 Bielefeld (DE)
(74) Representative: Hollinghurst, Antony

(57) **Abstract**

A brake for the wheels on one axle (24) of a pushchair or perambulator comprises a series of radially oriented ribs on one side face of each of the wheels and a respective brake member (42, 44) mounted for reciprocating movement parallel to the axle into and out of engagement with the ribs on a corresponding wheel. Each of the brake members (42, 44) has a cam follower (38, 40) on its inboard end engaging with a cam member (30) which is mounted for angular movement about a horizontal axis perpendicular to the axle (24). A foot-operated lever (32) is coupled to the cam member (30) so that downward pressure on one end causes angular movement of the cam member (30) in a first direction and downward pressure on the other end causes angular movement of the cam member (30) in a second direction.

## Description

This invention relates to a brake for a pushchair or perambulator having a pair of wheels on opposite ends of an axle, the brake being of the type comprising a series of radially oriented ribs on one side face of each of said wheels, a respective brake member mounted for reciprocating movement parallel to the axle into and out of engagement with the ribs on a corresponding wheel, and a foot-operated control arranged to move the brake members into and out of engagement with the ribs on their respective wheels.

US-A-4527665 discloses a known brake of this type, in which the control is mounted for angular movement about a vertical axis. The user's foot has to be pressed against one side of the control to cause engagement and the other side to cause disengagement. It is also known for the foot-operated control to be mounted for angular movement about the axle, downward movement causing the brake to be engaged and upward movement causing the brake to be disengaged. Consequently, it is necessary for a user's toe to be hooked under the foot-operated control in order to cause disengagement. With both of these known arrangements there is a risk of scuffing the user's shoe during operation of the brake.

It is an object of the present invention to provide a brake of the type described above in which both engagement and disengagement can be effected by downward pressure.

According to the invention, in a brake of the type described above, each of the brake members has a cam follower on its inboard end engaging with a cam member which is mounted for angular movement about a horizontal axis perpendicular to the axle, and the foot-operated control comprises an operating lever coupled to the cam member so that downward pressure on one end causes angular movement of the cam member in a first direction and downward pressure on the other end causes angular movement of the cam member in a second direction.

Preferably the cam followers on the brake members are biassed by respective springs into engagement with the cam. The cam member may include depressions in its surface positioned to receive the cam followers when the brake members are in their engaged positions so that displacement of the cam from its engaged position is resisted by such springs.

An embodiment of the invention will now be described, by way of example, with reference to the accompanying drawings, in which:
Figure 1 is a perspective view of a pushchair having a brake in accordance with the invention:
Figure 2 is a scrap sectional view taken on the line 2-2 in Figure 1, showing one of the rear wheels of the pushchair;
Figure 3 is a sectional view taken on the line 3-3 in Figure 1 showing only the central part of the brake assembly in its engaged position;
Figure 4 is a sectional view, similar to Figure 3 but showing the brake assembly in its released position, and:
Figure 5 is a partially broken-away plan view of the central part of the brake assembly shown in Figures 3 and 4.

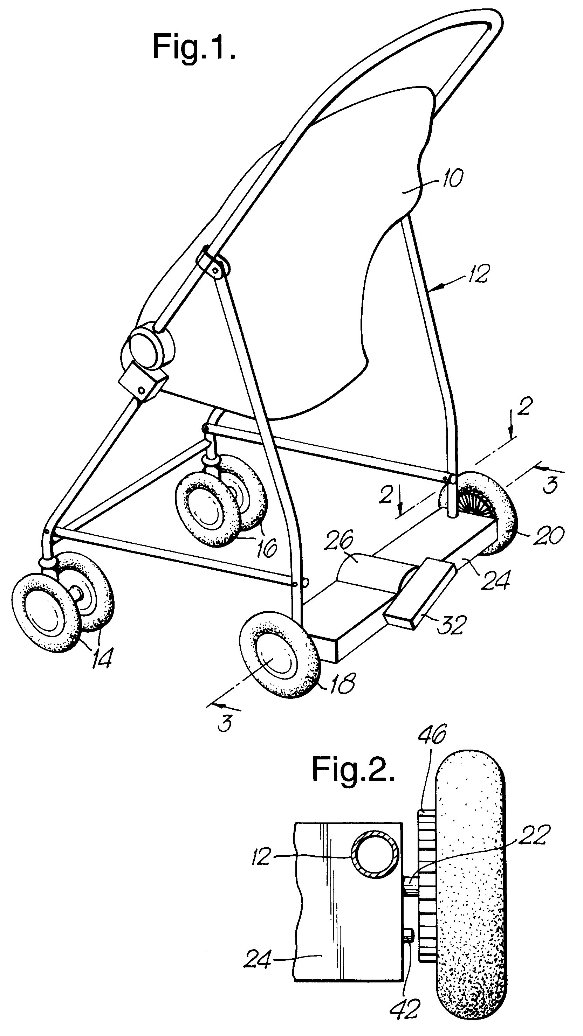

Referring to Figure 1, a pushchair to which the invention is applied has a seat 10 mounted on a frame 12 which has respective pairs of castoring front wheels 14 and 16. Rear wheels 18 and 20 are mounted on opposite ends of a rear axle 22 (Figure 2) which is accommodated in a rear axle case 24. The frame is of conventional design and will not be described in detail.

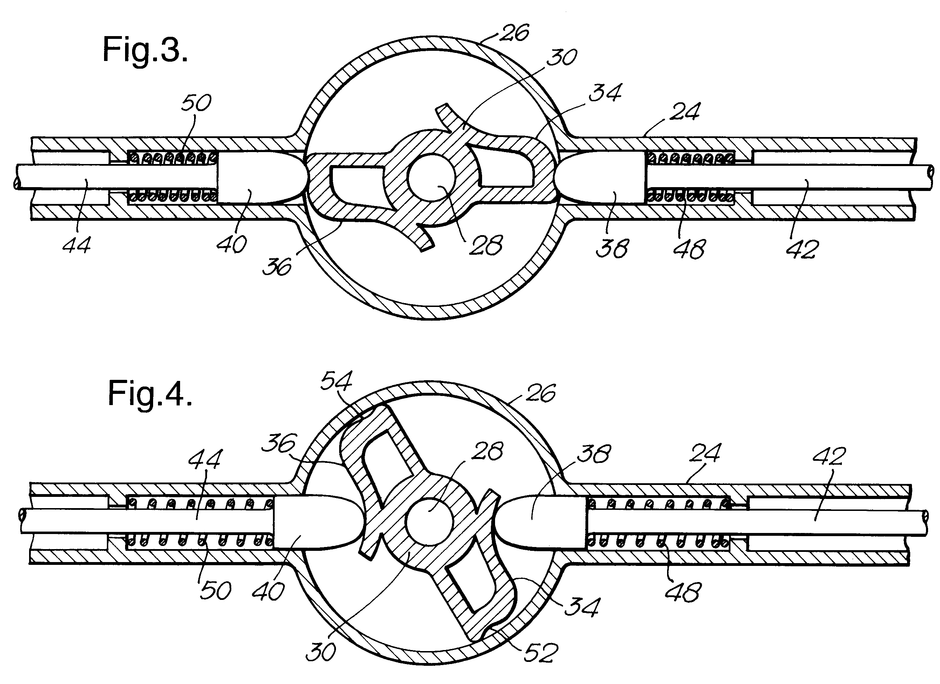

Referring particularly to Figures 3, 4 and 5, the axle case 24 has a central cylindrical portion 26 containing a central stub axle 28 on which a cam member 30 is journalled. A portion of the cam member 30 projects rearwardly out of the housing 26 and carries an integral operating lever 32 which is accessible to the toe of an adult pushing the pushchair.

The cam member 30 has respective cam surfaces 34 and 36 which are engaged by respective cam followers 38 and 40 mounted on the inner ends of respective brake members 42 and 44. The brake member 42 is movable into and out of engagement with radial ribs 46 on the inner face of the rear wheel 20. The brake member 44 is movable in and out of engagement with corresponding ribs (not shown) on the other rear wheel 18. Each of the cam followers 38 and 40 is biassed into engagement with its respective cam surface 34, 36 by a respective compression spring 48, 50.

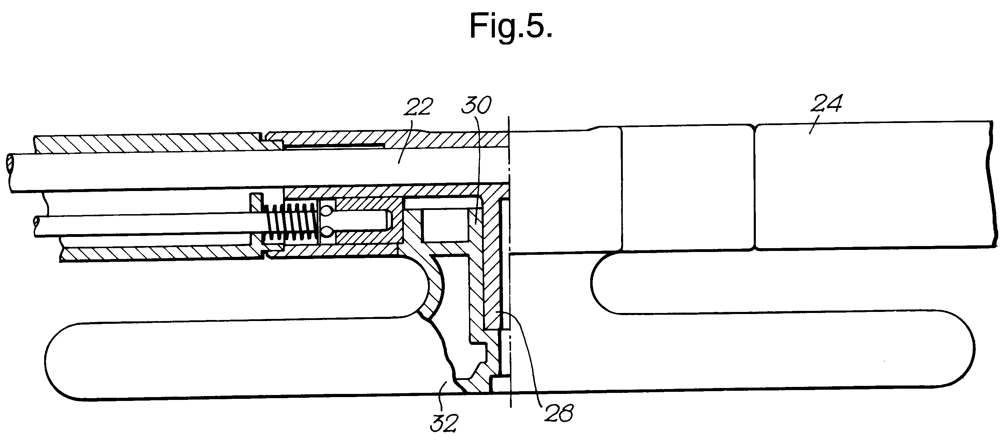

When the cam 30 is in the position shown in Figure 3, the brake members 42 and 44 are pushed outwards into engagement with the ribs 46 on the wheel 20 and the corresponding ribs (not shown) on the wheel 18. Downward pressure on the right hand end of the lever 32 pivots the cam 30 to the position shown in Figure 4 in which the compression springs 48 move the brake members 42 and 44 out of engagement with their respective rear wheels. Pressure on the left hand end of the lever 32 (Figure 5) returns the cam 30 to its locked position as shown in Figure 3. When in this position, the cam followers 38 and 40 engage in respective depressions 52 and 54 in the cam surfaces 34 and 36 so that the initial movement towards the disengaged position causes additional compression of the springs 48 and 50 which therefore tend to hold the cam 30 in its locked position.

## Claims

1. A brake for a pushchair or perambulator having a pair of wheels (18, 20) on opposite ends of an axle (22), the brake comprising a series of radially oriented ribs (46) on one side face of each of said wheels (18, 20), a respective brake member (42, 44) mounted for reciprocating movement parallel to the axle into and out of engagement with the ribs (46) on a corresponding wheel (20, 18), and a foot-operated control (32) arranged to move the brake members (42, 44) into and out of engagement with the ribs (46) on their respective wheels (20, 18), characterised in that each of the brake members (42, 44) has a cam follower (38, 40) on its inboard end engaging with a cam member (30) which is mounted for angular movement about a horizontal axis perpendicular to the axle (22), and the foot-operated control comprises an operating lever (32) coupled to the cam member (30) so that downward pressure on one end causes angular movement of the cam member (30) in a first direction and downward pressure on the other end causes angular movement of the cam member (30) in a second direction.

2. A brake according to claim 1, wherein the cam followers (38, 40) are biassed by respective springs (48, 50) into engagement with the cam member (30).

3. A brake according to claim 3, wherein the cam member (30) includes depressions (52, 54) in its surface positioned to receive the cam followers (38, 40) when the brake members (42, 44) are in their engaged positions.
